# EUROPEAN PATENT SPECIFICATION

(11) **EP 0 676 040 B1**
(45) Date of publication and mention of the grant of the patent: **10.07.2002**
(21) Application number: 93923616.2
(22) Date of filing: 25.10.1993
(51) Int. Cl.: G01K 1/20, F25D 29/00

(54) **TEMPERATURE INDICATING DEVICES**
TEMPERATURANZEIGEVORRICHTUNGEN
DISPOSITIFS D' INDICATION DE LA TEMPERATURE

(30) Priority: 24.10.1992 GB 9222374
(43) Date of publication of application: 11.10.1995
(73) Proprietor: UNICAIR LIMITED, Hayes, Bromley, Kent BR2 7EQ (GB)
(72) Inventor: Banham, Harry Francis, Bournemouth BH1 4PW (GB)
(74) Representative: Archer, Philip Bruce
(86) International application number: GB9302198
(87) International publication number: WO9410546

(56) References cited:
- DE-A- 2 825 353
- DE-A- 3 032 864
- GB-A- 2 240 846
- US-A- 2 923 786
- US-A- 5 004 355

## Description

This invention relates to temperature indicating devices and is particularly concerned with a device for use in indicating the temperature of the contents of a refrigerator or freezer.

It is well known to use a thermometer placed in a refrigerator and when it is required to check the temperature of the refrigerator, a user opens the door, takes out the thermometer and reads the temperature.

This method of operation has at least one drawback, ie the thermometer measures the temperature of the air in the refrigerator, and as soon as the door is opened, then the air temperature in the refrigerator rises with the consequent effect on the reading of the thermometer. The air temperature within the refrigerator is also affected by other factors, eg automatic off cycle and electrical defrosting. Further, when the thermometer is removed from the refrigerator to read its temperature measurement the temperature of the air outside the refrigerator causes the thermometer to tend towards reading the temperature of that air. It is obvious then that with the known methods of measuring temperature of the inside of a refrigerator, the temperature measurement reading is not truly related to the temperature of the contents of the refrigerator. Although the air temperature within the refrigerator rises immediately the door is opened, the temperature of the contents of the refrigerator ie the foodstuffs therein, tends to rise very slowly and such a rise is in practice hardly discernible for some time.

An alternative to the above method of measuring the temperature of goods or produce stored in the refrigerated space in a refrigerator, is to provide a thermometer of the known "probe" type where test probes are caused to pierce the foods and read from there, but this is destructive of the food which cannot then be sold to the consuming public.

There is disclosed in GB-A-2 240 846 (Liquid Crystal Devices Ltd) a slow response liquid crystal thermometer comprising the features of the precharacterising portion of claim 1 hereof. This prior device is of the kind adapted for use in the horizontal attitude in refrigerators and freezers for foodstuffs and comprising a housing for air-based insulating means, which housing protects and encloses a crystal thermometer extending lengthwise of the housing.

There is disclosed in US-A-5 004 355 (Ryan) temperature measuring apparatus in which a common tubular bulb thermometer has its bulb received through a seal (22) in the top of a partly-filled receptacle (20) containing a mixture of water and ethylene glycol providing an isothermal bath just for the bulb. The remainder of the thermometer, including its temperature-indicating stem, extends upwardly from the seal (22) within an air-containing cylindrical cover member (36) to enable the stem to be visually inspected. A bracket (46) mounts the apparatus on a wall (52) in a vertical attitude with the thermometer bulb (14) dipping into the expandable liquid (16) in receptacle (22). The thermometer bulb is thus double-encased by receptacle (20) and cover member (36).

In the embodiment of the invention described below a liquid or gel-sealed capsule is provided for the stem-type thermometer in which the liquid or gel surrounds the stem on all sides throughout its temperature-indicating lengthwise extent, and maintains the thermometer in intimate immersed contact with it, while maintaining complete enclosing protection for the stem under the arduous conditions of typical refrigerator or freezer use, and permitts inspection of the temperature-indicating thermometer stem through the capsule wall and liquid or gel.

An object of the invention is to provide a temperature measuring device providing improvements in relation to one or more of the matters discussed above, or generally.

According to the invention, there is provided a temperature measuring or indicating device, as defined in the accompanying claims.

In an embodiment, a temperature measuring or indicating device comprises a thermometer located in intimate contact with a medium capable of retaining a substantially constant temperature for a period of time.

Also in an embodiment, the thermometer is located within a sealed capsule containing such a medium. In the embodiment the capsule is transparent and the medium is a transparent liquid or gel which has a low freezing point. It is envisaged that the thermometer could be of the kind in which an end indicator shows the temperature, whereby it is not necessary for the medium or the capsule to be transparent.

By providing a medium to surround the thermometer or like temperature measuring or indicating device, the medium acting as a heat sink providing thermal inertia to resist rapid temperature fluctuations, the advantage is provided that the measured or indicated temperature at any time is less subject to short term fluctuations, such as occur when a refrigerator or freezer door is opened, or like changes are made in other environments.

The above and other aspects of the invention will become apparent from the following description which is given by way of example only with reference to the accompanying drawings in which :-

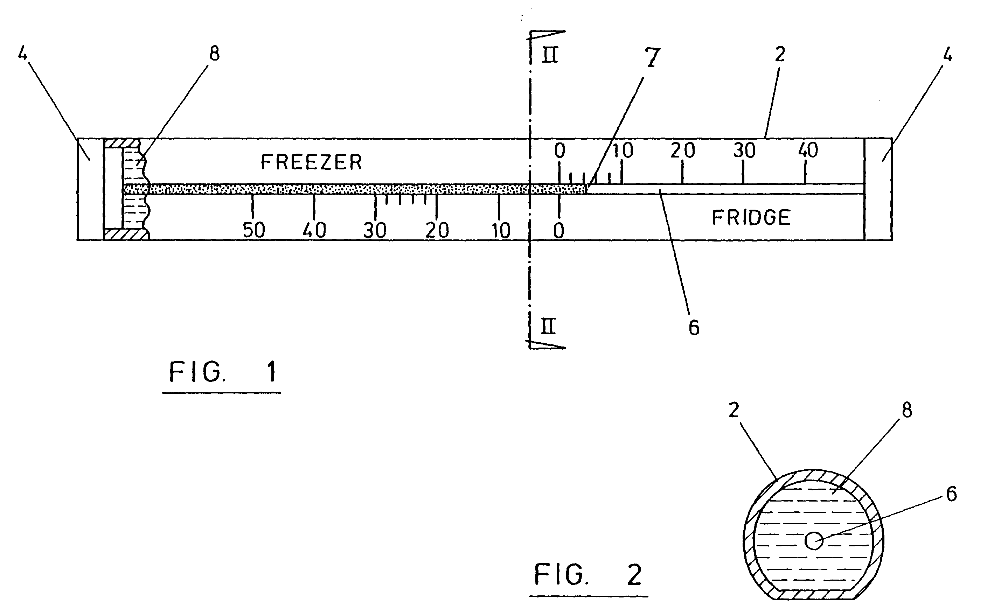

Figure 1 is a front elevation of a temperature indicating device according to the invention and Figure 2 is a section on lines II - II of Figure 1.

As seen in the drawings a device according to the invention comprises a capsule 2 sealed at its ends by caps 4, and centrally disposed therein is a thermometer 6 graduated towards one end portion with positive temperature measurements, ie in degrees Celsius above freezing point, and towards the other end with negative temperature measurements ie in degrees Celsius below freezing point. Thermometer 6 is of the kind comprising an enclosed volume of liquid which expands and contracts and indicates temperature variation by movement of a meniscus 7 along a capillary tube within the stem of thermometer 6.

The capsule 2 is filled with a transparent liquid 8 having a low freezing point, and a high thermal capacity relative to air, and hence a relatively high thermal inertia. An example of such a liquid is ethylene glycol.

When the device is in use it is placed in a refrigerator or freezer among the foodstuffs stored therein and the encapsulated liquid adopts the same temperature as those contents. The thermometer thus indicates the temperature of the encapsulated liquid and equally the temperature of the contents of the refrigerator or freezer.

When it is required to ascertain the temperature of the refrigerated foodstuffs, the device is taken out of the fridge where the temperature reading is substantially identical to that of the contents of the refrigerator rather than that of the air temperature within the refrigerator.

In combination, the capsule 2 and the liquid 8 have a slow reaction time to air temperature changes, and so, because the temperature of the encapsulated liquid is held comparatively constant for the short time necessary to read the thermometer, there is almost no change in temperature readings with the thermometer after its removal from the refrigerator. This. compares favourably with the normal system of providing a conventional thermometer whose reading starts to rise immediately it is removed from the refrigerator, or when the air temperature therein rises.

Thus it is found that the temperature of the encapsulated liquid in the device of the invention is more nearly the same as that of the foodstuffs and so gives a more accurate indication of the temperature of the refrigerator contents.

The example described above refers to the use of a portable encapsulated thermometer device where the reading or displayed temperature more closely relates to that of the foodstuff contents than that of the air within the refrigerator, whereby the otherwise misleading effect of door-opening on the air temperature within a refrigerator or freezer is avoided.

## Claims

1. A portable visual temperature indicating device of the kind adapted for use in refrigerators and freezers for foodstuffs and comprising a transparent housing (2, 4) for a heat sink or insulator (8) which protects and encloses an elongated temperature- indicating device (6) extending lengthwise of the housing and which, in use, serves to maintain, at least for a period of time sufficient for visual inspection of the indicated temperature through said housing, the temperature reached by the temperature-indicating device in a refrigerator or freezer where the temperature is to be indicated, after removal from that location, or after the ambient temperature has changed,
said temperature indicating device (6) comprising a thermometer (6) of the kind in which a liquid meniscus (7) moves lengthwise of a stem of the thermometer; and
said heat sink or insulator comprising a transparent liquid or gel medium (8) having a freezing point below the range covered by said device;
**characterised by** :
a) said housing (2, 4) for said temperature-indicating device comprising a liquid or gel-sealed transparent capsule (2, 4) containing said medium; and
b) said thermometer (6) including the stem thereof being mounted and contained within said capsule (2, 4) with said stem extending lengthwise thereof with said liquid medium (8) surrounding said stem on all sides of the lengthwise temperature-indicating extent thereof and said capsule permitting visual inspection of said temperature-indicating extent thereof through said capsule; and
c) said capsule (2, 4) serving to maintain said liquid or gel medium in intimate immersed contact with said stem throughout said temperature-indicating length thereof.

2. A device according to claim 1 **characterised in that** said stem of said thermometer (6) is centrally disposed in said housing (2, 4).

3. A device according to claim 1 or claim 2 **characterised by** said housing (2, 4) being provided with a flat face disposed with respect to the lengthwise extent of said thermometer stem to inhibit rolling of the device.

4. A device according to any one of the preceding claims **characterised by** said capsule (2, 4) being sealed at its ends by caps (4).

5. A device according to any one of the preceding claims **characterised by** said medium comprising ethylene glycol.

## Patentansprüche

1. Tragbare visuelle Temperaturanzeigevorrichtung der Art, die zur Verwendung in Kühl- und Gefrierschränken für Nahrungsmittel geeignet ist, mit einem transparenten Gehäuse (2, 4) für einen Kühlmantel oder Isolator (8), der eine in Längsrichtung des Gehäuses verlaufende längliche Temperaturanzeigevorrichtung (6) schützt und einschließt und der beim Gebrauch dazu dient, die von der Temperaturanzeigevorrichtung in einem Kühl- oder Gefrierschrank, in dem die Temperatur anzuzeigen ist, erreichte Temperatur nach Entnahme von diesem Ort oder nach Änderung der Umgebungstemperatur zumindest für eine Zeitdauer beizubehalten, die zum Ablesen der angezeigten Temperatur durch das Gehäuse ausreicht, wobei die Temperaturanzeigevorrichtung (6) ein Thermometer (6) der Art enthält, bei der sich ein Flüssigkeitsmeniskus in Längsrichtung eines Thermometerstabs bewegt, und wobei der Kühlmantel oder Isolator ein transparentes flüssiges oder gelförmiges Medium (8) mit einem Gefrierpunkt unterhalb dem von der Vorrichtung abgedeckten Bereich enthält,
**dadurch gekennzeichnet, daß**
a) das Gehäuse (2, 4) für die Temperaturanzeigevorrichtung eine für Flüssigkeit oder Gel undurchlässige transparente Kapsel (2, 4) hat, die das Medium enthält; und
b) das Thermometer (6) einschließlich seines Stabs in der Kapsel (2, 4) befestigt und enthalten ist, wobei sich der Stab in deren Längsrichtung erstreckt und das flüssige Medium (8) den Stab von allen Seiten seines länglichen die Temperatur anzeigenden Abschnitts umgibt und die Kapsel das Ablesen seines die Temperatur anzeigenden Abschnitts durch die Kapsel erlaubt; und
c) die Kapsel dazu dient, das flüssige oder gelförmige Medium in gutem eingebetteten Kontakt mit dem Stab über dessen gesamten die Temperatur anzeigenden Abschnitt zu halten.

2. Vorrichtung nach Anspruch 1, **dadurch gekennzeichnet, daß** der Stab des Thermometers (6) zentral in dem Gehäuse (2, 4) angeordnet ist.

3. Vorrichtung nach Anspruch 1 oder Anspruch 2, **dadurch gekennzeichnet, daß** das Gehäuse (2, 4) eine flache Seite hat, die in Längsrichtung des Thermometerstabs angeordnet ist, um ein Rollen der Vorrichtung zu verhindern.

4. Vorrichtung nach einem der vorhergehenden Ansprüche, **dadurch gekennzeichnet, daß** die Kapsel (2, 4) an ihren Enden durch Kappen (4) verschlossen ist.

5. Vorrichtung nach einem der vorhergehenden Ansprüche, **dadurch gekennzeichnet, daß** das Medium Ethylenglykol enthält.

## Revendications

1. Dispositif portable d'indication visuelle de la température, du type prévu pour une utilisation dans des réfrigérateurs et des congélateurs de produits alimentaires, comprenant un corps transparent (2, 4) pour contenir un absorbeur de chaleur ou un isolant thermique (8) qui protège et entoure un dispositif allongé d'indication de température (6) s'étendant dans la direction longitudinale du corps et qui sert à maintenir, en utilisation, au moins pendant un laps de temps suffisant pour l'inspection visuelle de la température indiquée à travers le dit corps, la température atteinte par le dispositif d'indication de température dans un réfrigérateur ou un congélateur dont on veut indiquer la température après enlèvement du dispositif de cet endroit, ou après changement de la température ambiante, le dit dispositif d'indication de température (6) comprenant un thermomètre (6) du type dans lequel un ménisque de liquide (7) se déplace dans la direction longitudinale d'une tige du thermomètre ; et
le dit absorbeur ou isolant thermique comprend un milieu transparent liquide ou en gel (8) ayant un point de congélation au-dessous de la plage couverte par le dit dispositif ;
**caractérisé en ce que** :
(a) le dit corps (2, 4) du dit dispositif d'indication de température comprend une capsule transparente étanche aux liquides ou aux gels (2, 4) contenant le dit milieu ;
(b) le dit thermomètre (6) a sa tige qui est montée et contenue dans la dite capsule (2, 4), la dite tige s'étendant dans sa direction longitudinale de sorte que le dit milieu liquide (8) entoure la dite tige sur tous les côtés de son étendue longitudinale d'indication de température, et la dite capsule permet une inspection visuelle de la dite étendue d'indication de température à travers la dite capsule ; et
(c) la dite capsule (2, 4) sert à maintenir le dit milieu liquide ou en gel en contact immergé intime avec la dite tige sur toute sa dite longueur d'indication de température.

2. Dispositif selon la revendication 1, **caractérisé en ce que** la dite tige du dit thermomètre (6) est disposée centralement dans le dit corps (2, 4).

3. Dispositif selon la revendication 1 ou la revendication 2, **caractérisé en ce que** le dit corps (2, 4) présente une face plane placée, par rapport à l'étendue longitudinale de la dite tige de thermomètre, de façon à empêcher le dispositif de rouler.

4. Dispositif selon une quelconque des revendications précédentes, **caractérisé en ce que** la dite capsule (2, 4) est fermée à ses extrémités par des bouchons (4).

5. Dispositif selon une quelconque des revendications précédentes, **caractérisé en ce que** le dit milieu comprend de l'éthylène glycol.
